# NEW EUROPEAN PATENT SPECIFICATION

(11) **EP 3 300 791 B2**
(45) Date of publication and mention of the opposition decision: **09.12.2026**
(45) Mention of the grant of the patent: 27.03.2019
(21) Application number: 17200920.1
(22) Date of filing: 24.04.2008
(51) Int. Cl.: B01J 29/064, B01J 29/072, B01J 29/76, B01J 29/85, B01J 29/06, B01J 29/87, B01J 29/56, B01J 29/46, B01J 29/076, B01D 53/94, C01B 39/38, C01B 39/46, C01B 39/54, B01J 29/83

(54) **TRANSITION METAL/ZEOLITE SCR CATALYSTS**
ÜBERGANGSMETALL/ZEOLITH-SCR-KATALYSATOREN
CATALYSEURS SCR DE ZÉOLITHE/MÉTAL DE TRANSITION

(30) Priority: 26.04.2007 WO PCT/GB2007/050216
(43) Date of publication of application: 04.04.2018
(62) Document number(s) of the earlier application(s) in accordance with Art. 76 EPC: 17189358.9 / 3 278 863; 14171510.2 / 2 786 796; 08762186.8 / 2 150 328
(73) Proprietor: Johnson Matthey Public Limited Company, Royston, Hertfordshire SG8 5HE (GB)
(72) Inventor: ANDERSEN, Paul Joseph, Wayne, PA 19087 (US); CASCI, John Leonello, Billingham Cleveland TS23 1LB (GB); CHEN, Hai-Ying, Wayne, PA 19087 (US); COLLIER, Jillian Elaine, Reading, Berkshire RG4 9NH (GB); FEDEYKO, Joseph Michael, Wayne, PA 19087 (US); FOO, Rodney Kok Shin, Caversham Berkshire RG4 8JL (GB); RAJARAM, Raj Rao, Reading, Berkshire RG4 9NH (GB)
(74) Representative: Boult Wade Tennant LLP

(56) References cited:
- EP-A1- 1 147 801
- EP-A1- 1 147 801
- WO-A1-2005/016497
- WO-A1-2005/016497
- WO-A1-2008/106519
- WO-A1-99/29400
- WO-A2-03/054364
- WO-A2-03/054364
- WO-A2-2008/106518
- DE-A1- 102004 013 164
- DE-A1- 102004 013 164
- DE-A1- 102005 010 221
- DE-A1- 102005 010 221
- US-A- 4 544 538
- US-A- 4 912 776
- US-A1- 2002 039 550
- US-A1- 2005 031 514
- US-A1- 2006 115 403
- TATSUMI ISHIHARA, MASARU KAGAWA, FUMIAKI HADAMA, HIROYASU NISHIGUCHI, MASAMI ITO, YUSAKU TAKITA: "Thermostable Molecular Sieves, Silicoaluminophosphate (SAPO)-34, for the Removal of NOX with C3H6 in the Coexistence of O2, H2O, and SO2", IND. ENG. CHEM. RES., vol. 36, no. 1, 6 January 1997 (1997-01-06), pages 17 - 22, XP002778277, DOI: 10.1021/ie960389s
- "Catalytic Air Pollution Control", second edition, Eds. Heck, R. M.et al., John Wiley & Sons 2002, pages 79-80, 2005
- R. HECK, ET AL: "Catalytic Air Pollution Control. Commercial Technology", JOHN WILEY & SONS, 1 January 2002 (2002-01-01), pages 79 - 80, XP055679082
- TATSUMI ISHIHARA, MASARU KAGAWA, FUMIAKI HADAMA, HIROYASU NISHIGUCHI, MASAMI ITO, YUSAKU TAKITA: "Thermostable Molecular Sieves, Silicoaluminophosphate (SAPO)-34, for the Removal of NOX with C3H6 in the Coexistence of O2, H2O, and SO2", IND. ENG. CHEM. RES., vol. 36, no. 1, 6 January 1997 (1997-01-06), pages 17 - 22, XP002778277, DOI: 10.1021/ie960389s
- Karlsson, Hans T. et al., "Flue Gas Denitrification. Selective Catalytic Oxidation of NO to NO2" Ind. Eng. Chem. Process. Des. Dev., Vol. 23, 1984 particular relevance: pages 808-814
- International Zeolite Association, "Database of Zeolite Structures –BEA [27.07.2020] Available from: https://europe.iza- structure.org/IZA-SC/framework.php7STC=BEA
- International Zeolite Association, "Database of Zeolite Structures -FAU" (cited 27.07.2020) Available from: https://europe.iza- structure.org/IZA-SC/framework.php7STC=FAU
- International Zeolite Association, "Database of Zeolite Structures -EMT” (cited 27.07.2020) Available from: https://europe.iza- structure.org/IZA-SC/framework.php7STC=EMT
- International Zeolite Association, "Database of Zeolite Structures -MFI" (cited 27.07.2020) Available from: https://europe.iza- structure.org/IZA-SC/framework.php7STC=MFI)
- International Zeolite Association, "Database of Zeolite Structures" (cited 27.07.2020) Available from: https://europe.iza- structure.org/IZA-SC/framework.php7STC=LTA
- Database of Zeolite Structures 2017 https://europe.iza-structure.org/IZA-SC/framework.php?STC=CHA
- Urea-SCR Technology for deNOx After Treatment of Diesel Exhausts, Springer,2014, Chapter 5: “Cu/Zeolite SCR Catalysts for Automotive Diesel NOx EmissionControl”, pp 133 and 140-142
- Urea-SCR Technology for deNOx After Treatment of Diesel Exhausts, Springer,2014, Chapter 9: “The Role of NO2 in the NH3-SCR Catalytic Chemistry”,pp 262-263
- Wikipedia entry for “Global warming potential”(https://en.wikipedia.org/wiki/Global_warming_potential, accessed 9 September 2024)
- Wikipedia NOx
- Wikipedia Diesel exhaust

## Description

The present invention relates to a method of converting nitrogen oxides in an exhaust gas of a vehicular lean-burn internal combustion engine to nitrogen by contacting the nitrogen oxides with a nitrogenous reducing agent in the presence of a transition metal-containing zeolite catalyst.

Selective catalytic reduction (SCR) of NOₓ by nitrogenous compounds, such as ammonia or urea, was first developed for treating industrial stationary applications. SCR technology was first used in thermal power plants in Japan in the late 1970s, and has seen widespread application in Europe since the mid-1980s. In the USA, SCR systems were introduced for gas turbines in the 1990s and have been used more recently in coal-fired powerplants. In addition to coal-fired cogeneration plants and gas turbines, SCR applications include plant and refinery heaters and boilers in the chemical processing industry, furnaces, coke ovens, municipal waste plants and incinerators. More recently, NOₓ reduction systems based on SCR technology are being developed for a number of vehicular (mobile) applications in Europe, Japan, and the USA, e.g. for treating diesel exhaust gas.

Several chemical reactions occur in an NH₃ SCR system, all of which represent desirable reactions that reduce NOₓ to nitrogen. The dominant reaction is represented by reaction (1).

4NO + 4NH₃ + O₂ → 4N₂ + 6H₂O (1)

Competing, non-selective reactions with oxygen can produce secondary emissions or may unproductively consume ammonia. One such non-selective reaction is the complete oxidation of ammonia, shown in reaction (2).

4NH₃ + 5O₂ → 4NO + 6H₂O (2)

Also, side reactions may lead to undesirable products such as N₂O, as represented by reaction (3).

4NH₃ + 5NO + 3O₂ → 4N₂O + 6H₂O (3)

Aluminosilicate zeolites are used as catalysts for SCR of NOₓ with NH₃. One application is to control NOₓ emissions from vehicular diesel engines, with the reductant obtainable from an ammonia precursor such as urea or by injecting ammonia *per se*. To promote the catalytic activity, transition metals are incorporated into the aluminosilicate zeolites. The most commonly tested transition metal zeolites are Cu/ZSM-5, Cu/Beta, Fe/ZSM-5 and Fe/Beta because they have a relatively wide temperature activity window. In general, Cu-based zeolite catalysts show better low temperature NOₓ reduction activity than Fe-based zeolite catalysts.

However, in use, ZSM-5 and Beta zeolites have a number of drawbacks. They are susceptible to dealumination during high temperature hydrothermal ageing resulting in a loss of acidity, especially with Cu/Beta and Cu/ZSM-5 catalysts. Both Beta- and ZSM-5-based catalysts are also affected by hydrocarbons which become adsorbed on the catalysts at relatively low temperatures and are oxidised as the temperature of the catalytic system is raised generating a significant exotherm, which can thermally damage the catalyst. This problem is particularly acute in vehicular diesel applications where significant quantities of hydrocarbon can be adsorbed on the catalyst during cold-start; and Beta and ZSM-5 zeolites are also prone to coking by hydrocarbons.

In general, Cu-based zeolite catalysts are less thermally durable, and produce higher levels of N₂O than Fe-based zeolite catalysts. However, they have a desirable advantage in that they slip less ammonia in use compared with a corresponding Fe-zeolite catalyst.

It has been reported that aluminophosphate zeolites that contain transition metals demonstrate enhanced catalytic activity and superior thermal stability than aluminosilicate zeolite catalysts for SCR of NOₓ with hydrocarbons (also known as lean NOₓ catalysis or "DeNOx catalysts" (e.g. Ishihara et al., Journal of Catalysis, 169 (1997) 93)). In a similar vein, WO 2006/064805 discloses an electrical processing technology for treating diesel engine exhaust gas which utilizes corona discharge. A combination of a device for adding a NOₓ reducer (hydrocarbon or fuel) and a Cu-SAPO-34 NOₓ reducing catalyst can be disposed downstream of the electrical processing apparatus. However, to our knowledge, there has been no investigation of transition metal-containing aluminophosphate zeolites for SCR of NOₓ with NH₃ (or urea) reported in any literature to date.

WO 00/72965 discloses iron (Fe) exchanged zeolites for the selective catalytic reduction of nitrogen monoxide by ammonia for controlling NOₓ emissions from fossil-fuel power plants and engines. The Fe-exchanged, and optionally Fe-rare earth-exchanged, e.g. Fe-Ce-exchanged, zeolites suggested include: ZSM-5, mordenite, SAPO, clinoptilolite, chabazite, ZK-4 and ZK-5. No specific SAPO zeolites are identified and no experiment using SAPO zeolites is disclosed. Moreover, WO '965 teaches that the disclosure has application to zeolites with a range of pore sizes, i.e. large (mordenite), medium (ZSM-5, clinoptilolite) and small (chabazite, ZK-4, ZK-5) pore zeolites, with Fe-ZSM-5 preferred. There is no teaching or suggestion of any advantage in the use of small pore zeolites compared with medium and large pore zeolites. Moreover, ZK-4 zeolite is potentially hydrothermally unstable.

US patent no. 4,735,927 discloses an extruded-type NH₃-SCR catalyst with stability to sulfur poisoning comprising a high surface area titania in the form of anatase and a natural or synthetic zeolite. The zeolite must be either in the acid form or thermally convertible to the acid form in the catalytic product. Examples of suitable zeolites include mordenite, natural clinoptilolite, erionite, heulandite, ferrierite, natural faujasite or its synthetic counterpart zeolite Y, chabazite and gmelinite. A preferred zeolite is natural clinoptilolite, which may be mixed with another acid stable zeolite such as chabazite. The catalyst may optionally include small amounts (at least 0.1% by elemental weight) of a promoter in the form of precursors of vanadium oxide, copper oxide, molybdenum oxide or combinations thereof (0.2 wt% Cu and up to 1.6 wt% V are exemplified). Extruded-type catalysts are generally less durable, have lower chemical strength, require more catalyst material to achieve the same activity and are more complicated to manufacture than catalyst coatings applied to inert monolith substrates.

US patent no. 5,417,949 also discloses an extruded-type NH₃-SCR catalyst comprising a zeolite having a constraint index of up to 12 and a titania binder. Intentionally, no transition metal promoter is present. ("Constraint Index" is a test to determine shape-selective catalytic behaviour in zeolites. It compares the reaction rates for the cracking of n-hexane and its isomer 3-methylpentane under competitive conditions (see V.J. Frillette et al., J Catal. 67 (1991) 218)).

US patent no. 5,589,147 discloses an ammonia SCR catalyst comprising a molecular sieve and a metal, which catalyst can be coated on a substrate monolith. The molecular sieve useful in the invention is not limited to any particular molecular sieve material and, in general, includes all metallosilicates, metallophosphates, silicoaluminophosphates and layered and pillared layered materials. The metal is typically selected from at least one of the metals of Groups of the Periodic Table IIIA, IB, IIB, VA, VIA, VIIA, VIIIA and combinations thereof. Examples of these metals include at least one of copper, zinc, vanadium, chromium, manganese, cobalt, iron, nickel, rhodium, palladium, platinum, molybdenum, tungsten, cerium and mixtures thereof.

The disclosure of US 5,589,147 is ambiguous about whether small pore zeolites (as defined herein) have any application in the process of the invention. For example, on the one hand, certain small pore zeolites are mentioned as possible zeolites for use in the invention, i.e. erionite and chabazite, while, among others, the molecular sieve SAPO-34 was "contemplated". On the other hand a table is presented listing Constraint Index (CI) values for some typical zeolites "including some which are suitable as catalysts in the process of this invention". The vast majority of the CI values in the table are well below 10, of which erionite (38 at 316°C) and ZSM-34 (50 at 371°C) are notable exceptions. However, what is clear is that intermediate pore size zeolites, e.g. those having pore sizes of from about 5 to less than 7 Angstroms, are preferred in the process of the invention. In particular, the disclosure explains that intermediate pore size zeolites are preferred because they provide constrained access to and egress from the intracrystalline free space: "The intermediate pore size zeolites...have an effective pore size such as to freely sorb normal hexane...if the only pore windows in a crystal are formed by 8-membered rings of oxygen atoms, then access to molecules of larger cross-section than normal hexane is excluded and the zeolite is not an intermediate pore size material." Only extruded Fe-ZSM-5 is exemplified.

WO 2004/002611 discloses an NH₃-SCR catalyst comprising a ceria-doped aluminosilicate zeolite.

US 6,514,470 discloses a process for catalytically reducing NOₓ in an exhaust gas stream containing nitrogen oxides and a reductant material. The catalyst comprises an aluminium-silicate material and a metal in an amount of up to about 0.1 weight percent based on the total weight of catalyst. All of the examples use ferrierite.

Long et al. Journal of Catalysis 207 (2002) 274-285 reports on studies of Fe³⁺-exchanged zeolites for selective catalytic reduction of NO with ammonia. The zeolites investigated were mordenite, clinoptilolite, Beta, ferrierite and chabazite. It was found that in the conditions studied that the SCR activity decreases in the following order: Fe-mordenite > Fe-clinoptilolite > Fe-ferrierite > Fe-Beta > Fe-chabazite. The chabazite used for making the Fe-chabazite was a naturally occurring mineral.

US patent no. 4,961,917 discloses an NH₃-SCR catalyst comprising a zeolite having a silica-to-alumina ratio of at least about 10, and a pore structure which is interconnected in all three crystallographic dimensions by pores having an average kinetic pore diameter of at least about 7 Angstroms and a Cu or Fe promoter. The catalysts are said to have high activity, reduced NH₃ oxidation and reduced sulphur poisoning. Zeolite Beta and zeolite Y are two zeolites that meet the required definition.

US patent no. 3,895,094 discloses an NH₃-SCR process using zeolite catalysts of at least 6 Angstrom intercrystalline pore size. No mention is made of exchanging the zeolites with transition metals.

US patent no. 4,220,632 also discloses an NH₃-SCR process, this time using 3-10 Angstrom pore size zeolites of Na or H form.

WO 02/41991 discloses metal promoted zeolite Beta for NH₃-SCR, wherein the zeolite is pre-treated so as to provide it with improved hydrothermal stability.

There is a need in the art for SCR catalysts that have relatively good low temperature SCR activity, that have relatively high selectivity to N₂ - in particular low N₂O formation, that have relatively good thermal durability and are relatively resistant to hydrocarbon inhibition. We have now discovered a family of transition metal-containing zeolites that meet or contribute to this need.

According to one aspect, the invention provides a method according to claim 9.

EP 1147801 A1 discloses a process for reducing nitrogen oxides contained in a lean exhaust gas of an internal combustion engine comprising selectively reducing the nitrogen oxides using ammonia on a reduction catalyst containing a zeolite exchanged with transition metals. A part of the nitrogen monoxide is reduced to nitrogen dioxide before the gas is fed together with the ammonia over a reduction catalyst. Oxidation of the nitrogen monoxide is carried out so that the exhaust gas contains 30-70 vol.% nitrogen dioxide before contact with the reduction catalyst. The disclosure mentions the zeolites ZSM-5, A, beta, X, Y, ferrierite, Linde type L and faujasite and the transition metals vanadium, chromium, iron, nickel, copper, cerium, praseodymium and terbium. ZSM-5 zeolite exchanged with at least one of iron and copper is mentioned specifically and Fe-ZSM5 is exemplified.

WO 2005/016497 A1 discloses an emission treatment system and method for simultaneously remediating the nitrogen oxides (NOx), particulate matter, and gaseous hydrocarbons present in diesel engine exhaust streams. The emission treatment system has an oxidation catalyst upstream of a soot filter coated with a material effective in the Selective Catalytic Reduction (SCR) of NOx by a reductant, e.g., ammonia. A preferred embodiment is that the SCR catalyst composition contains a zeolite and a base metal component selected from one or more of a copper and iron component. Preferably, the base metal component is a copper component. Preferred zeolites of the SCR catalyst composition have a silica to alumina ratio of at least about 10. The zeolites USY, Beta and ZSM-20 are mentioned and Cu-Beta is exemplified.

WO 03/054364 A2 discloses an exhaust system for an internal combustion engine, which exhaust system comprising means for introducing a reducing agent, or a precursor thereof, into an exhaust gas carried by the exhaust system and a filter for particulate matter comprising a catalyst capable of selectively catalysing the reduction of NOx with a reducing agent, which filter is disposed downstream of the introducing means. Optionally, the system can comprise a catalyst capable of oxidising NO to NO₂ disposed upstream of the filter. The disclosure mentions zeolite-based SCR catalysts and vanadium-based catalysts and even Pt-based SCR catalysts. For zeolite-based catalysts, the zeolites ZSM-5, mordenite, gamma zeolite and beta zeolite are mentioned. The disclosure also states that the zeolites can be metallised - the metals Fe, V, Cu, Ce and Pt are mentioned - or non-metallised. Cu/ZSM-5 is specifically identified. An apparatus comprising a 10 g/ft³ Pt catalyst for oxidising NO disposed upstream V₂O₅/TiO₂ catalyst coated on a diesel particulate filter is exemplified.

DE102005010221 A1 discloses a method for producing a catalytically active tectosilicate-based mineral consisting in treating said tectosilicate with a metal salt solution and in drying it. The method is characterised in that the dried tectosilicate is ion exchanged in the form of hydrogen with a copper-based metal salt. Preferably, the tectosilicate is a natural mineral zeolite, preferably heulandite and very preferably clinoptilolite, although the document discloses that other natural zeolites including "mordenite, chabazite etc." could be used. Copper/clinoptilolite is exemplified.

By "zeolite catalyst containing at least one transition metal" herein we mean a zeolite structure to which has been added by ion exchange, impregnation or isomorphous substitution etc. one or more metals. "Transition metal-containing zeolite catalyst" and "zeolite catalyst containing at least one transition metal" and similar terms are used interchangeably herein.

The distinction between zeolite type materials, such as naturally occurring (i.e. mineral) chabazite, and isotypes within the same Framework Type Code is not merely arbitrary, but reflects differences in the properties between the materials, which may in turn lead to differences in activity in the method of the present invention. For example, the naturally occurring chabazite has a lower silica-to-alumina ratio than aluminosilicate isotypes such as SSZ-13, the naturally occurring chabazite has lower acidity than aluminosilicate isotypes such as SSZ-13 and the activity of the material in the method of the present invention is relatively low (see the comparison of Cu/naturally occurring chabazite with Cu/SAPO-34 (not according to the invention) in Example 13).

The zeolite catalysts for use in the present invention is coated on a suitable substrate monolith.

Whilst the prior art (such as the documents discussed in the background section hereinabove) does mention a few small pore zeolites containing at least one transition metal for converting nitrogen oxides in a gas to nitrogen with a nitrogenous reducing agent, there is no appreciation in the prior art that we can find of the particular advantages of using small pore zeolites containing at least one transition metal for this purpose. Thus, the prior art suggests using large, medium and small pore zeolites containing at least one transition metal, without distinction.

It will be appreciated that the invention extends to catalyst coatings comprising both transition metal-containing small pore zeolites according to the invention and non-small pore zeolites (whether metallised or not) such as medium-, large- and meso-pore zeolites (whether containing transition metal(s) or not) because such a combination also obtains the advantages of using small pore zeolites *per se*. It should also be understood that the catalyst coatings for use in the invention can comprise combinations of two or more transition metal-containing small pore zeolites. In this invention, we have discovered that certain transition metal-containing small pore zeolites are advantageous catalysts for SCR of NOₓ with NH₃. Compared to transition metal-containing medium, large or meso-pore zeolite catalysts, transition metal-containing small pore zeolite catalysts demonstrate significantly improved NOₓ reduction activity, especially at low temperatures. They also exhibit high selectivity to N₂ (e.g. low N₂O formation) and good hydrothermal stability. Furthermore, small pore zeolites containing at least one transition metal are more resistant to hydrocarbon inhibition than larger pore zeolites, e.g. a medium pore zeolite (a zeolite containing a maximum ring size of 10) such as ZSM-5 or a large pore zeolite (a zeolite having a maximum ring size of 12), such as Beta.

Zeolites with application in the present invention can include those that have been treated to improve hydrothermal stability. Illustrative methods of improving hydrothermal stability include:
(i) Dealumination by: steaming and acid extraction using an acid or complexing agent e.g. (EDTA - ethylenediaminetetracetic acid); treatment with acid and/or complexing agent; treatment with a gaseous stream of SiCl₄ (replaces Al in the zeolite framework with Si);
(ii) Cation exchange - use of multi-valent cations such as La; and
(iii) Use of phosphorous containing compounds (see e.g. US patent no. 5,958,818).

We believe that the small pore zeolites may minimise the detrimental effect of hydrocarbons by means of a molecular sieving effect, whereby the small pore zeolite allows NO and NH₃ to diffuse to the active sites inside the pores but that the diffusion of hydrocarbon molecules is restricted. In this regard, the kinetic diameter of both NO (3.16Å) and NH₃ (2.6Å) is smaller than those of the typical hydrocarbons (C₃H₆ ~ 4.5Å, n-C₈H₁₈ ~4.30Å and C₇H₈ ~ 6.0Å) present in, for example, diesel engine exhaust. Accordingly, in one embodiment the small pore zeolite catalysts for use in the present invention have a pore size in at least one dimension of less than 4.3 Å. Illustrative examples of suitable small pore zeolites, SSZ-13 being according to the present invention, are set out in Table 1.

**Table 1: Details of small pore zeolites, SSZ-13 being with application in the present invention**

| **Zeolite Framework Type (by Framework Type Code)** | **Type material* and illustrative isotypic framework structures** | **Dimensionality** | **Pore size (Å)** | **Additional info** |
|---|---|---|---|---|
| CHA | *Chabazite | 3D | 3.8 x 3.8 | Ring sizes - 8, 6, 4 |
| | AlPO-34 | | | |
| | [Al-As-O]-CHA | | | |
| | [Al-Co-P-O]-CHA | | | |
| | \|Co\| [Be-P-O]-CHA | | | |
| | \|Co₃(C₆N₄H₂₄)₃(H₂O)₉\|[Be₁₈P₁₈O₇₂]-CHA | | | |
| | [Co-Al-P-O]-CHA | | | |
| | \|Li-Na\| [Al-Si-O]-CHA | | | |
| | [Mg-Al-P-O]-CHA | | | |
| | [Si-O]-CHA | | | |
| | [Zn-Al-P-O]-CHA | | | |
| | [Zn-As-O]-CHA | | | |
| | CoAPO-44 | | | |
| | CoAPO-47 | | | |
| | DAF-5 | | | |
| | GaPO-34 | | | |
| | K-Chabazite | | | |
| | Linde D | | | |
| | Linde R | | | |
| | LZ-218 | | | |
| | MeAPO-47 | | | |
| | MeAPSO-47 | | | |
| | (Ni(deta)₂)-UT-6 | | | |
| | Phi | | | |
| | SAPO-34 | | | |
| | SAPO-47 | | | |
| | SSZ-13 | | | |
| | UiO-21 | | | |
| | Willhendersonite | | | |
| | ZK-14 | | | |
| | ZYT-6 | | | |

Small pore zeolites with particular application for treating NOₓ in exhaust gases of lean-burn internal combustion engines, e.g. vehicular exhaust gases are set out in Table 2.

**Table 2: Small pore zeolite for use in treating exhaust gases of lean-burn internal combustion engines.**

| **Structure** | **Zeolite** |
|---|---|
| CHA | SSZ-13 |

Small pore alumino silicate zeolites for use in the present invention have a silica-to-alumina ratio (SAR) of from 8 to 150. It will be appreciated that higher SAR ratios are preferred to improve thermal stability, but this may negatively affect transition metal exchange. Therefore, in selecting preferred materials consideration can be given to SAR so that a balance may be struck between these two properties.

The gas containing the nitrogen oxides can contact the zeolite catalyst at a gas hourly space velocity of from 5,000 hr⁻¹ to 500,000 hr⁻¹, optionally from 10,000 hr⁻¹ to 200,000 hr⁻¹.

The total of the at least one transition metal, i.e. copper, that can be included in the at least one transition metal-containing zeolite for use in the claimed invention can be from 0.01 to 20 wt%, based on the total weight of the zeolite catalyst containing at least one transition metal. In one embodiment, the total of the at least one transition metal that can be included can be from 0.1 to 10wt%. In a particular embodiment, the total of the at least one transition metal that can be included is from 0.5 to 5wt%.

The transition metal-containing three-dimensional small pore zeolite/aluminosilicate zeolite for use in the present invention consists of Cu/SSZ-13. Preliminary analysis indicates that Cu/SSZ-13 is more resistant than the equivalent Cu/SAPO-34 to extended severe high temperature lean hydrothermal ageing (900°C for 3 hours in 4.5% H₂O/air mixture *cf.* Example 4).

The at least one transition metal, i.e. copper, can be included in the zeolite by any feasible method. For example, it can be added after the zeolite has been synthesised, e.g. by incipient wetness or exchange process; or the at least one metal can be added during zeolite synthesis.

The zeolite catalyst for use in the present invention is coated, e.g. as a washcoat component, on a suitable monolith substrate, such as a metal or ceramic flow through monolith substrate or a filtering substrate, such as a wall-flow filter or sintered metal or partial filter (such as is disclosed in WO 01/80978 or EP 1057519, the latter document describing a substrate comprising convoluted flow paths that at least slows the passage of soot therethrough).

The small pore zeolite catalyst containing at least one transition metal for use in the present invention is coated on a suitable monolith substrate. Washcoat compositions containing the zeolites for use in the present invention for coating onto the monolith substrate can comprise a binder selected from the group consisting of alumina, silica, (non-zeolite) silica-alumina, naturally occurring clays, TiO₂, ZrO₂, and SnO₂.

In one embodiment, the nitrogen oxides are reduced with the reducing agent at a temperature of at least 100°C. In another embodiment, the nitrogen oxides are reduced with the reducing agent at a temperature from about 150°C to 750°C. The latter embodiment is particularly useful for treating exhaust gases from heavy and light duty diesel engines, particularly engines comprising exhaust systems comprising (optionally catalysed) diesel particulate filters which are regenerated actively, e.g. by injecting hydrocarbon into the exhaust system upstream of the filter, wherein the zeolite catalyst for use in the present invention is located downstream of the filter.

In a particular embodiment, the temperature range is from 175 to 550°C. In another embodiment, the temperature range is from 175 to 400°C.

Zeolites for use in the present application are synthetic zeolites, because synthetic zeolites can have a more uniform: silica-to-alumina ratio (SAR), crystallite size, crystallite morphology, and the absence of impurities (e.g. alkaline earth metals).

The source of nitrogenous reductant can be ammonia *per se*, hydrazine or any suitable ammonia precursor, such as urea ((NH₂)₂CO), ammonium carbonate, ammonium carbamate, ammonium hydrogen carbonate or ammonium formate.

The method is used for treating exhaust gas from a vehicular lean burn internal combustion engine, such as a diesel engine, a lean-burn gasoline engine or an engine powered by liquid petroleum gas or natural gas.

According to a further aspect, the invention provides an exhaust system according to claim 1.

For the avoidance of doubt, the small pore transition metal-containing zeolites for use in the exhaust system aspect of the present invention include any for use in the method according to the invention as described hereinabove.

In one embodiment, the zeolite catalyst is coated on a flow-through monolith substrate (i.e. a honeycomb monolithic catalyst support structure with many small, parallel channels running axially through the entire part) or filter monolith substrate such as a wall-flow filter etc., as described hereinabove.

The system can include means, when in use, for controlling the metering means so that nitrogenous reductant is metered into the flowing exhaust gas only when it is determined that the zeolite catalyst is capable of catalysing NOₓ reduction at or above a desired efficiency, such as at above 100°C, above 150°C or above 175°C. The determination by the control means can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR and boost pressure.

In a particular embodiment, metering is controlled in response to the quantity of nitrogen oxides in the exhaust gas determined either directly (using a suitable NOₓ sensor) or indirectly, such as using pre-correlated look-up tables or maps - stored in the control means - correlating any one or more of the abovementioned inputs indicative of a condition of the engine with predicted NOₓ content of the exhaust gas.

The control means can comprise a pre-programmed processor such as an electronic control unit (ECU).

The metering of the nitrogenous reductant can be arranged such that 60% to 200% of theoretical ammonia is present in exhaust gas entering the SCR catalyst calculated at 1:1 NH₃/NO and 4:3 NH₃/NO₂.

The oxidation catalyst for oxidising nitrogen monoxide in the exhaust gas to nitrogen dioxide is located upstream of a point of metering the nitrogenous reductant into the exhaust gas. In one embodiment, the oxidation catalyst is adapted to yield a gas stream entering the SCR zeolite catalyst having a ratio of NO to NO₂ of from about 4:1 to about 1:3 by volume, e.g. at an exhaust gas temperature at oxidation catalyst inlet of 250°C to 450°C. This concept is disclosed in S. Kasaoka et al. "Effect of Inlet NO/NO2 Molar Ratio and Contribution of Oxygen in the Catalytic Reduction of Nitrogen Oxides with Ammonia", Nippon Kagaku Kaishi, 1978, No. 6, pp. 874-881 and WO 99/39809.

The at least one platinum group metal (or some combination of these), such as platinum, palladium or rhodium, can be coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

In a further embodiment, a suitable filter substrate is located between the oxidation catalyst and the zeolite catalyst. Filter substrates can be selected from any of those mentioned above, e.g. wall flow filters. Where the filter is catalysed, e.g. with an oxidation catalyst of the kind discussed above, preferably the point of metering nitrogenous reductant is located between the filter and the zeolite catalyst. Alternatively, if the filter is uncatalysed, the means for metering nitrogenous reductant can be located between the oxidation catalyst and the filter. It will be appreciated that this arrangement is disclosed in WO 99/39809.

In a further embodiment, the zeolite catalyst for use in the present invention is coated on a filter located downstream of the oxidation catalyst. Where the filter includes the zeolite catalyst for use in the present invention, the point of metering the nitrogenous reductant is preferably located between the oxidation catalyst and the filter.

In one embodiment, the control means meters nitrogenous reductant into the flowing exhaust gas only when the exhaust gas temperature is at least 100°C, for example only when the exhaust gas temperature is from 150°C to 750°C.

In a further aspect, there is provided an apparatus comprising a vehicular lean-burn engine comprising an exhaust system according to the present invention.

The vehicular lean burn internal combustion engine can be a diesel engine, a lean-burn gasoline engine or an engine powered by liquid petroleum gas or natural gas.

In order that the invention may be more fully understood, reference is made to the following Examples by way of illustration only and with reference to the accompanying drawings, in which:
Figure 1 is a graph showing NOₓ conversion (at a gas hourly space velocity of 30,000 hr⁻¹) comparing transition metal-containing alumino silicate catalysts with a transition metal-containing aluminophosphate/small pore zeolite catalyst after relatively moderate lean hydrothermal ageing performed on a laboratory reactor;
Figure 2 is a graph showing N₂O formation in the test shown in Figure 1;
Figure 3 is a graph showing NOₓ conversion (at a gas hourly space velocity of 100,000 hr⁻¹) comparing Cu/Beta zeolite and Cu/SAPO-34 catalysts with a transition metal-containing aluminophosphate/small pore zeolite catalyst after relatively moderate lean hydrothermal ageing performed on a laboratory reactor;
Figure 4 is a graph showing NOₓ conversion (at a gas hourly space velocity of 30,000 hr⁻¹) comparing transition metal-containing alumino silicate catalysts with a transition metal-containing aluminophosphate/small pore zeolite catalyst after relatively severe lean hydrothermal ageing performed on a laboratory reactor;
Figure 5 is a graph showing NOₓ conversion for fresh Cu/zeolite catalysts;
Figure 6 is a graph showing NOₓ conversion for aged Cu/zeolite catalysts;
Figure 7 is a graph showing N₂O formation for fresh Cu/zeolite catalysts of Figure 5;
Figure 8 is a graph showing N₂O formation for aged Cu/zeolite catalysts of Figure 6;
Figure 9 is a graph showing the effect of adding HC species to Cu/zeolite catalysts during NH₃ SCR at 300°C;
Figure 10 is a graph showing hydrocarbon breakthrough following addition of hydrocarbon species to Cu/zeolite catalysts during NH₃ SCR at 300°C;
Figure 11 is a graph showing the adsorption profiles of n-octane at 150°C flowing through the Cu/zeolite catalysts;
Figure 12 is a graph of the temperature programmed desorption (TPD) of HC species to Cu/zeolite catalysts after HC adsorption at 150°C;
Figure 13 is a graph similar to Figure 6 comparing NOₓ conversion activity for aged Cu/Sigma-1, Cu/SAPO-34, Cu/SSZ-13 and Cu/Beta;
Figure 14 is a graph similar to Figure 8 comparing N₂O formation for the aged Cu/zeolite catalysts of Figure 13;
Figure 15 is a graph similar to Figure 13 comparing NOₓ conversion activity for aged Cu/ZSM-34, Cu/SAPO-34, Cu/SSZ-13 and Cu/Beta catalysts;
Figure 16 is a graph comparing the NOₓ conversion activity of fresh and aged Cu-SAPO-34 and Cu/SSZ-13 catalysts;
Figure 17 is a graph comparing the NOₓ conversion activity of fresh samples of Cu/SAPO-34 with a Cu/naturally occurring chabazite type material;
Figure 18 is a bar chart comparing the NOₓ conversion activity of fresh Cu/SAPO-34 with that of two fresh Cu/naturally occurring chabazite type materials at two temperature data points;
Figure 19 is a bar chart comparing the NOₓ conversion activity of aged Cu/Beta, Cu/SAPO-34, Fe/SAPO-34 and Fe/SSZ-13 catalysts at two temperature data points;
Figure 20 is a bar chart comparing the hydrocarbon inhibition effect of introducing n-octane into a feed gas for fresh Fe/Beta and Fe/SSZ-13 catalysts;
Figure 21 is a graph showing hydrocarbon breakthrough following the introduction of n-octane in the experiment of Figure 20;
Figure 22 is a bar chart comparing the effect on NOₓ conversion activity for a fresh Fe/SSZ-13 catalyst of using 100% NO as a component of the feed gas with using 1:1 NO:NO₂;
Figure 23 is a schematic diagram of an embodiment of an exhaust system according to the present invention.

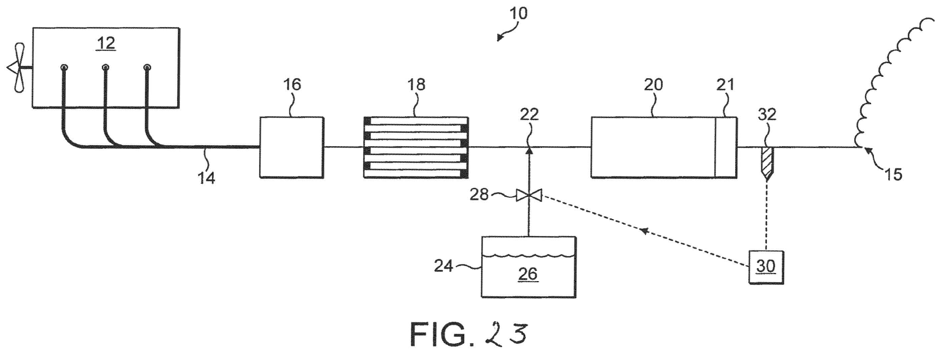

Figure 23 is a schematic diagram of an embodiment of an exhaust system, which although not according to the invention, illustrates a use of the zeolite catalyst according to the present invention, wherein diesel engine 12 comprises an exhaust system 10 according to the present invention comprising an exhaust line 14 for conveying an exhaust gas from the engine to atmosphere via tailpipe 15. In the flow path of the exhaust gas is disposed a platinum or platinum/palladium NO oxidation catalyst 16 coated on a ceramic flow-through substrate monolith. Located downstream of oxidation catalyst 16 in the exhaust system is a ceramic wall-flow filter 18.

An iron/small pore zeolite SCR catalyst 20 (not according to the invention) also coated on a ceramic flow-through substrate monolith is disposed downstream of the wall-flow filter 18. An NH₃ oxidation clean-up or slip catalyst 21 is coated on a downstream end of the SCR catalyst monolith substrate. Alternatively, the NH₃ slip catalyst can be coated on a separate substrate located downstream of the SCR catalyst. Means (injector 22) is provided for introducing nitrogenous reductant fluid (urea 26) from reservoir 24 into exhaust gas carried in the exhaust line 14. Injector 22 is controlled using valve 28, which valve is in turn controlled by electronic control unit 30 (valve control represented by dotted line). Electronic control unit 30 receives closed loop feedback control input from a NOₓ sensor 32 located downstream of the SCR catalyst.

In use, the oxidation catalyst 16 passively oxidises NO to NO₂, particulate matter is trapped on filter 18 and is combusted in NO₂. NOₓ emitted from the filter is reduced on the SCR catalyst 20 in the presence of ammonia derived from urea injected via injector 22. It is also understood that mixtures of NO and NO₂ in the total NOₓ content of the exhaust gas entering the SCR catalyst (about 1:1) are desirable for NOₓ reduction on a SCR catalyst as they are more readily reduced to N₂. The NH₃ slip catalyst 21 oxidises NH₃ that would otherwise be exhausted to atmosphere. A similar arrangement is described in WO 99/39809.

### EXAMPLES

### Example 1 - Method of making fresh 5wt% Fe/Beta or SAPO-34 or 3wt% SSZ-13 zeolite catalyst (not according to the invention)

Commercially available Beta zeolite, SAPO-34 or SSZ-13 was NH₄⁺ ion exchanged in a solution of NH₄NO₃, then filtered. The resulting material was added to an aqueous solution of Fe(NO₃)₃ with stirring. The slurry was filtered, then washed and dried. The procedure can be repeated to achieve a desired metal loading. The final product was calcined.

### Example 2 - Method of making fresh 3wt% Culzeolites

Commercially available SAPO-34 (not according to the invention), SSZ-13, Sigma-1 (not according to the invention), ZSM-34 (not according to the invention), Nu-3 (not according to the invention), ZSM-5 (not according to the invention) and Beta (not according to the invention) zeolites were NH₄⁺ ion exchanged in a solution of NH₄NO₃, then filtered. The resulting materials were added to an aqueous solution of Cu(NO₃)₂ with stirring. The slurry was filtered, then washed and dried. The procedure can be repeated to achieve a desired metal loading. The final product was calcined.

### Example 3 - Lean Hydrothermal Ageing

The catalysts obtained by means of Examples 1 and 2 were lean hydrothermally aged at 750°C for 24 hours in 4.5% H₂O/air mixture.

### Example 4 - Severe Lean Hydrothermal Ageing

The catalysts obtained by means of Examples 1 and 2 were severely lean hydrothermally aged at 900°C for 1 hour in 4.5% H₂O/air mixture.

### Example 5 - Extended Severe Lean Hydrothermal Ageing

The catalysts obtained by means of Examples 1 and 2 were severely lean hydrothermally aged at 900°C for a period of 3 hours in 4.5% H₂O/air mixture.

### Example 6 - Test Conditions

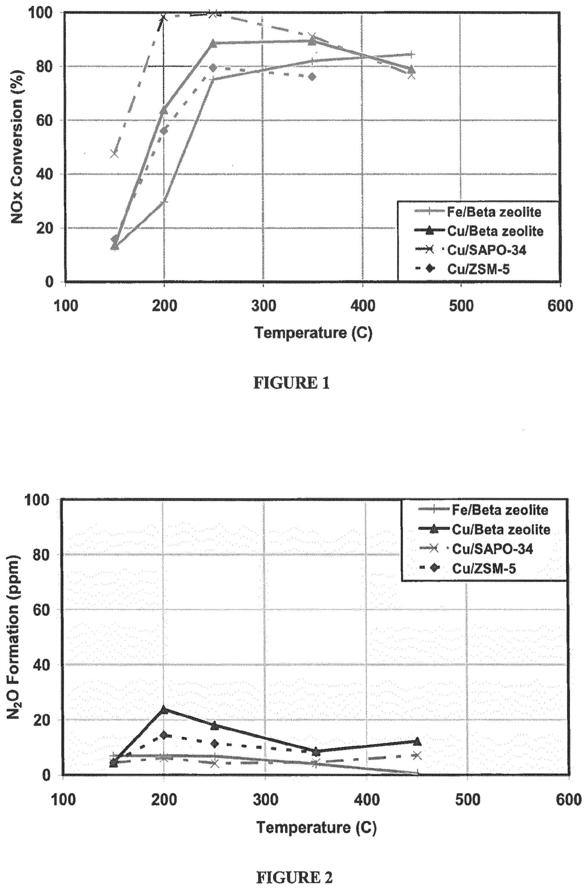

Separate samples of Fe/Beta (not according to the invention) prepared according to Example 1 and Cu/Beta (not according to the invention), Cu/ZSM-5 (not according to the invention) and Cu/SAPO-34 (not according to the invention) prepared according to Example 2 were aged according to Examples 3 and 4 and tested in a laboratory apparatus using the following gas mixture: 350ppm NO, 350ppm NH₃, 14%O₂, 4.5% H₂O, 4.5% CO₂, N₂ balance. The results are shown in Figures 1 to 4 inclusive.

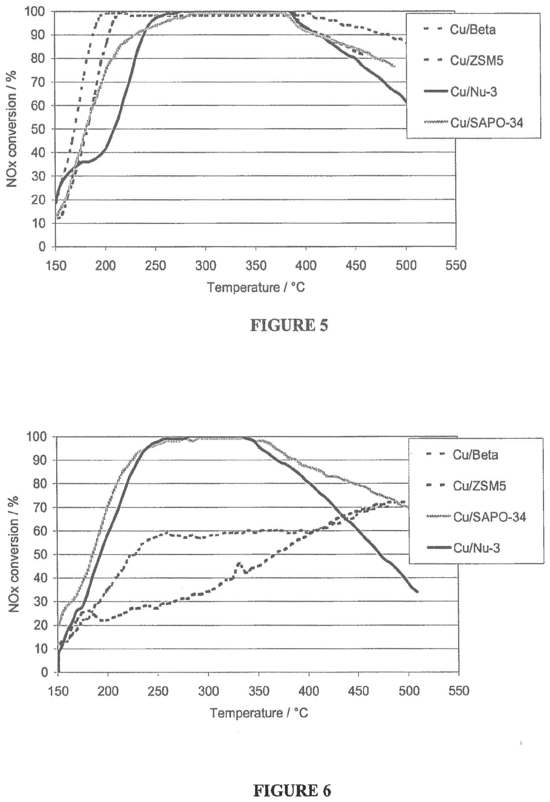

Tests were also conducted on Cu/Beta (not according to the invention), Cu/ZSM-5 (not according to the invention), Cu/SAPO-34 (not according to the invention) and Cu/Nu-3 (not according to the invention) prepared according to Example 2 and aged according to Example 3 and tested in a laboratory apparatus using the same gas mixture as described above, except in that 12%O₂ was used. The results are shown in Figures 5 to 8 inclusive.

### Example 7 - n-Octane adsorption test conditions

With the catalyst loaded in a laboratory apparatus, 1000ppm (as C1 equivalents) propene, n-octane or toluene was injected during NH₃ SCR at 300°C (350ppm NO, 350ppm NH₃, 12%O₂, 4.5%H₂O, 4.5%CO₂, balance N₂). Hydrocarbon desorption was measured by ramping the temperature at 10°C/minute in 12%O₂, 4.5%H₂O, 4.5%CO₂, balance N₂.

### Example 8 - Results for experiments shown in Figures 1 to 4 inclusive

Figure 1 compares the NOₓ reduction efficiencies of a Cu/SAPO-34 catalyst (not according to the invention) against a series of aluminosilicate zeolite supported transition metal catalysts (Cu/ZSM-5 (not according to the invention), Cu/Beta (not according to the invention) and Fe/Beta (not according to the invention)) after a mild aging. The result clearly demonstrates that Cu/SAPO-34 (not according to the invention) has improved low temperature activity for SCR of NOₓ with NH₃.

Figure 2 compares the N₂O formation over the catalysts. It is clear that the Cu/SAPO-34 catalyst (not according to the invention) produced lower levels of N₂O compared to the other two Cu-containing catalysts. The Fe-containing catalyst also exhibits low N₂O formation, but as shown in Figure 1, the Fe catalyst is less active at lower temperatures.

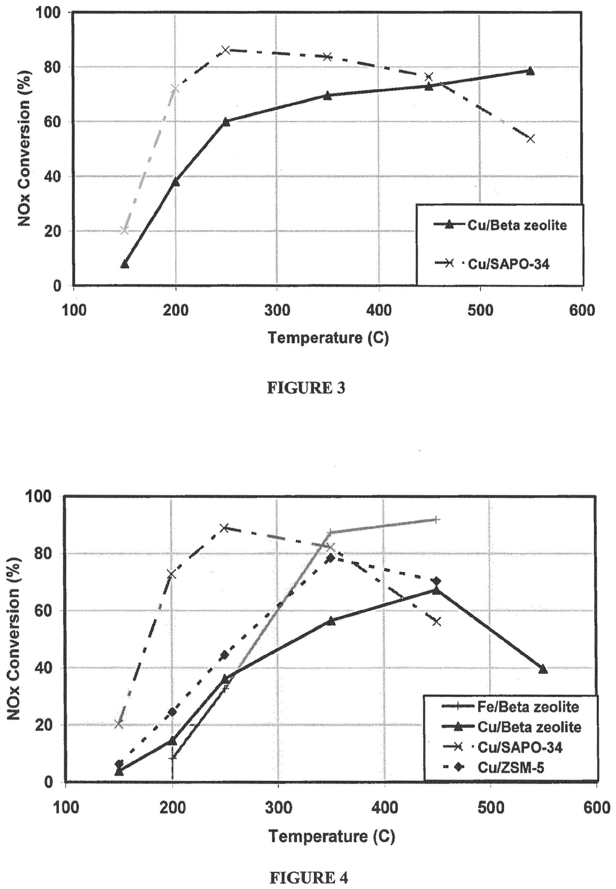

Figure 3 compares the NOₓ reduction efficiencies of a Cu/SAPO-34 catalyst (not according to the invention) against a Cu/Beta catalyst (not according to the invention) tested at a higher gas hourly space velocity. The Cu/SAPO-34 catalyst (not according to the invention) is significantly more active than the Cu-Beta catalyst (not according to the invention) at low reaction temperatures.

Figure 4 shows the NOₓ reduction efficiencies of a Cu/SAPO-34 catalyst (not according to the invention) and a series of aluminosilicate zeolite supported transition metal catalysts (Cu/ZSM-5 (not according to the invention), Cu/Beta (not according to the invention), and Fe/Beta (not according to the invention)) after severe lean hydrothermal aging. The result clearly demonstrates that the Cu/SAPO-34 catalyst (not according to the invention) has superior hydrothermal stability.

### Example 9 - Results for experiments shown in Figures 5 to 12 inclusive

NH₃ SCR activity of fresh (i.e. un-aged) Cu supported on the small pore zeolites SAPO-34 (not according to the invention) and Nu-3 (not according to the invention) was compared to that of Cu supported on larger pore zeolites in Figure 5. The corresponding activity for the same catalysts aged under severe lean hydrothermal conditions is shown in Figure 6. Comparison of the fresh and aged activity profiles demonstrates that hydrothermal stability is only achieved for aluminosilicate zeolites when the Cu is supported on a small pore zeolite.

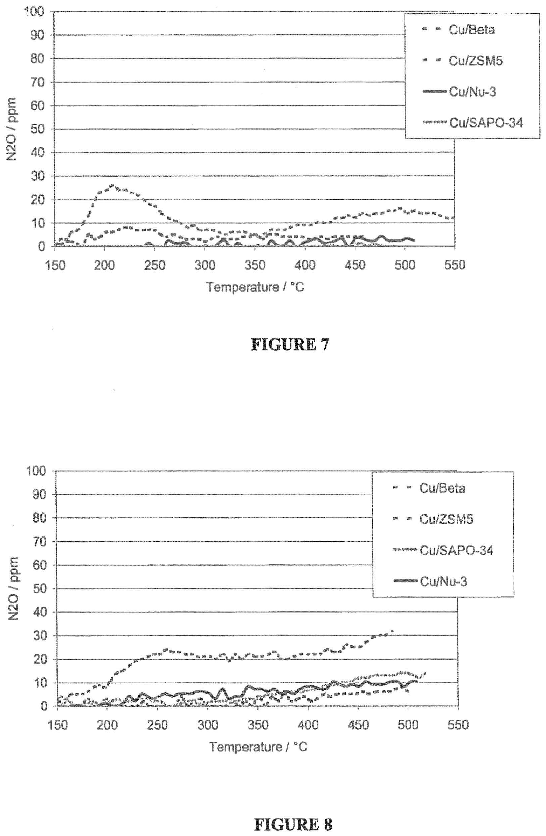

The N₂O formation measured for the fresh and aged catalysts is shown in Figures 7 and 8, respectively. The results clearly show that N₂O formation is significantly reduced by means of supporting Cu on zeolites that do not have large pores.

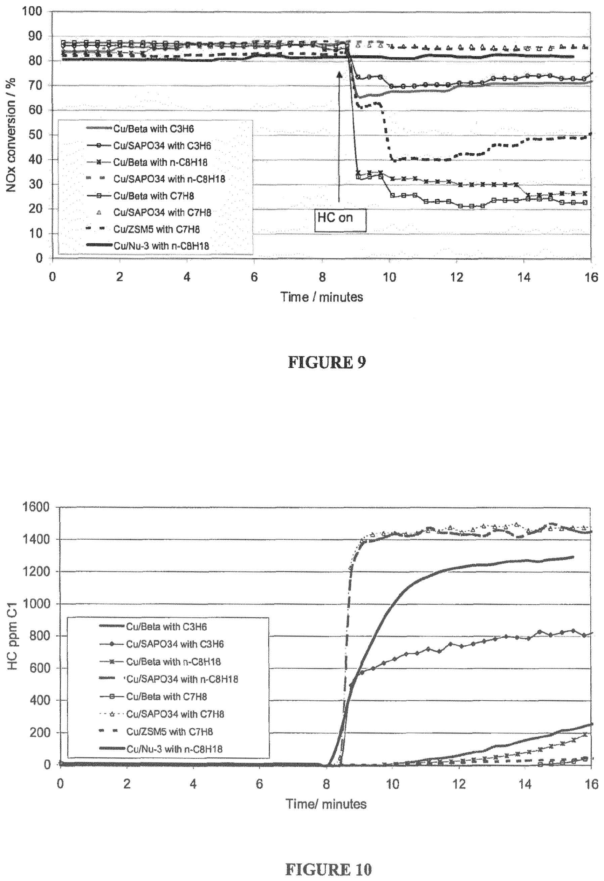

Figure 9 compares the effect of HC on Cu/zeolite catalysts where SAPO-34 (not according to the invention) and Nu-3 (not according to the invention) are used as examples of small pore zeolite materials. For comparison, ZSM-5 (not according to the invention) and Beta zeolite (not according to the invention) are used as examples of a medium and large pore zeolite, respectively. Samples were exposed to different HC species (propene, n-octane and toluene) during NH₃ SCR reaction at 300°C. Figure 10 shows the corresponding HC breakthrough following HC addition.

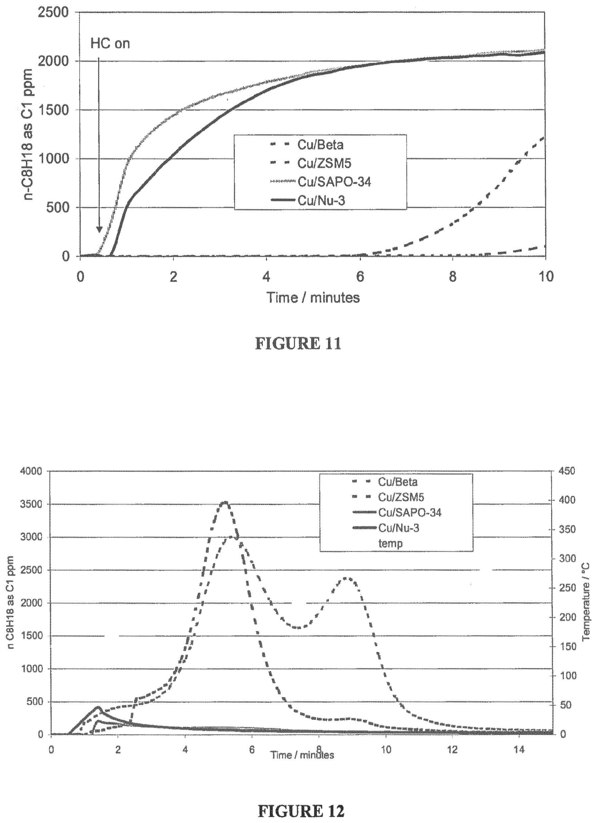

Figure 11 shows the adsorption profiles of n-octane at 150°C flowing through different Cu/zeolite catalysts. HC breakthrough is observed almost immediately with Cu supported on the small pore zeolites SAPO-34 (not according to the invention) and Nu-3 (not according to the invention), whereas significant HC uptake is observed with Cu on Beta zeolite (not according to the invention) and ZSM-5 (not according to the invention). Figure 12 shows the subsequent HC desorption profile as a function of increasing temperature and confirms that large amounts of HC are stored when Cu is supported on the larger pore zeolites, whereas very little HC is stored when small pore zeolites are employed.

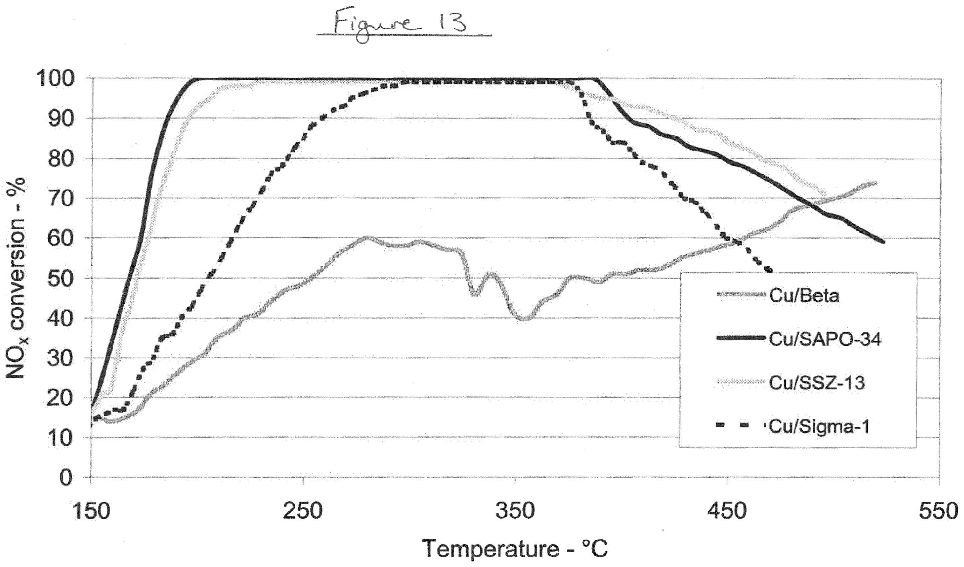

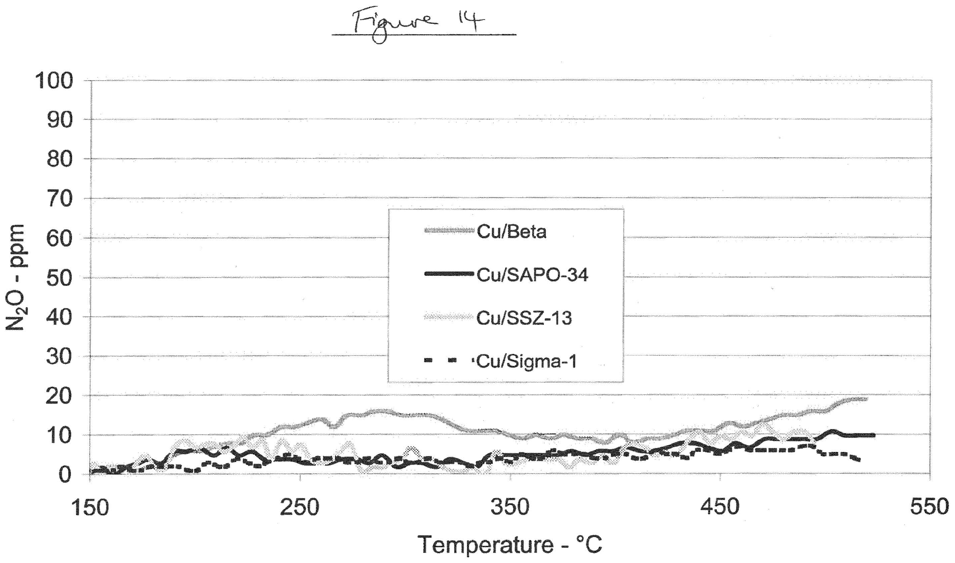

### Example 10 - Results for experiments shown in Figures 13 and 14

Cu/SSZ-13 (according to the invention), Cu/SAPO-34 (not according to the invention), Cu/Sigma-1 (not according to the invention) and Cu/Beta (not according to the invention) prepared according to Example 2 were aged in the manner described in Example 4 and tested according to Example 6. The results are shown in Figure 13, from which it can be seen that the NOₓ conversion activity of each of the severely lean hydrothermally aged Cu/SSZ-13, Cu/SAPO-34 and Cu/Sigma-1 samples is significantly better than that of the corresponding large-pore zeolite, Cu/Beta. Moreover, from Figure 14 it can be seen that Cu/Beta generates significantly more N₂O than the Cu/small-pore zeolite catalysts.

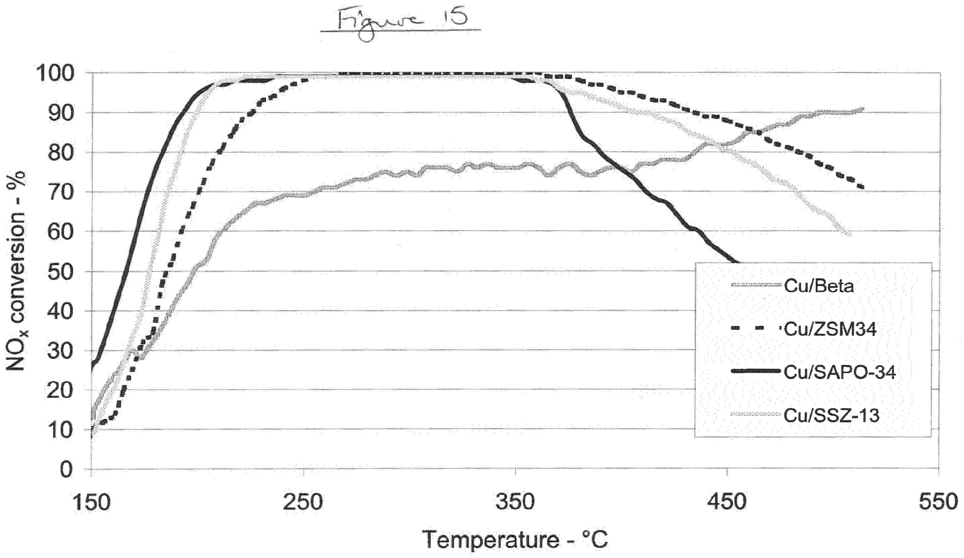

### Example 11 - Results for experiments shown in Figure 15

Cu/ZSM-34 (not according to the invention), Cu/SAPO-34 (not according to the invention), Cu/SSZ-13 (according to the invention) and Cu/Beta (not according to the invention) prepared according to Example 2 were aged in the manner described in Example 3 and tested according to Example 6. The results are shown in Figure 15, from which it can be seen that the NOₓ conversion activity of each of the lean hydrothermally aged Cu/SSZ-13, Cu/SAPO-34 and Cu/ZSM-34 samples is significantly better than that of the corresponding large-pore zeolite, Cu/Beta.

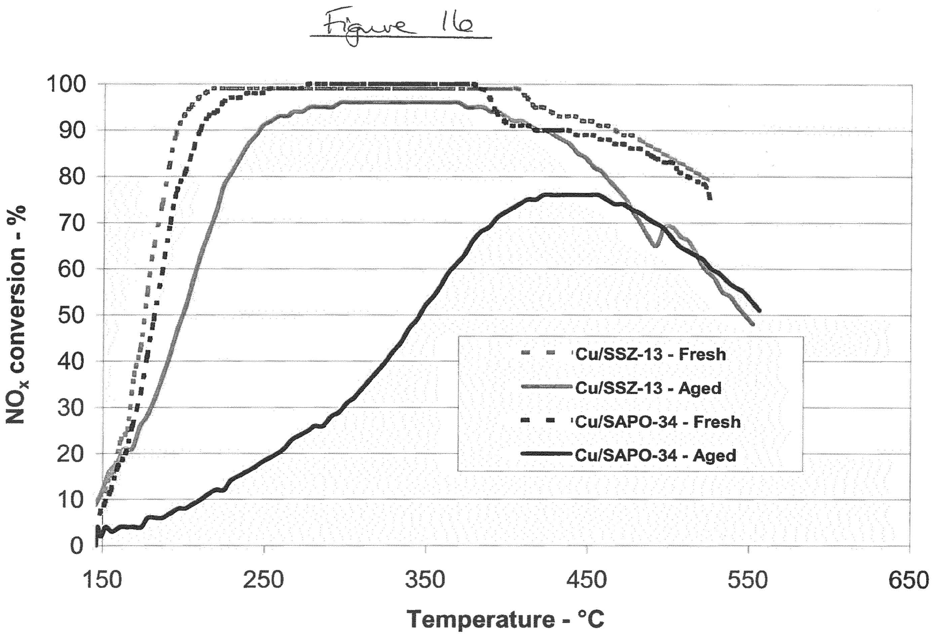

### Example 12 - Results for experiments shown in Figure 16

Fresh samples of Cu/SSZ-13 (according to the invention) and Cu/SAPO-34 (not according to the invention) were prepared according to Example 2, samples of which were aged in the manner described in Example 5. Fresh (i.e. un-aged) and aged samples were tested according to Example 6 and the results are shown in Figure 16, from which it can be seen that the NOₓ conversion activity of Cu/SSZ-13 is maintained even after extended severe lean hydrothermal ageing.

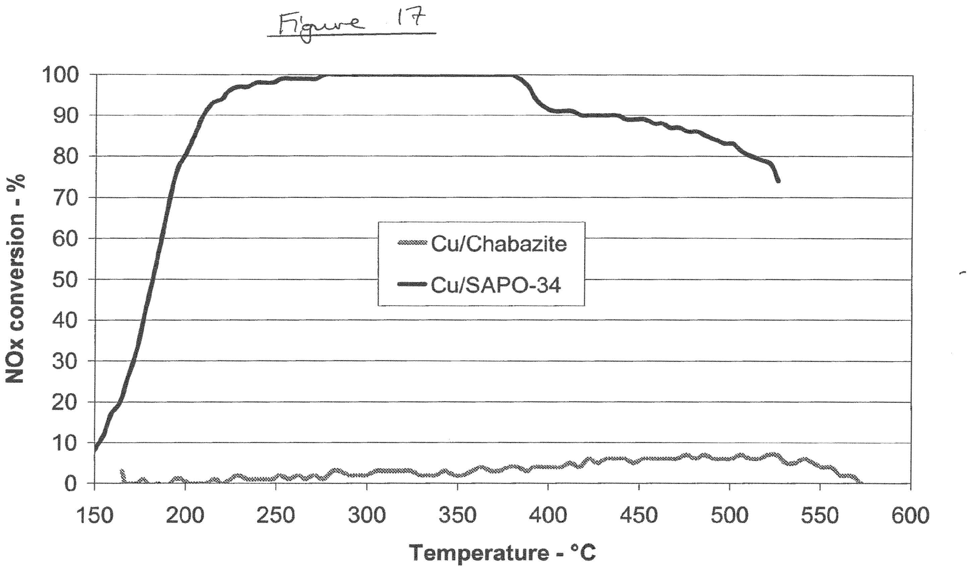

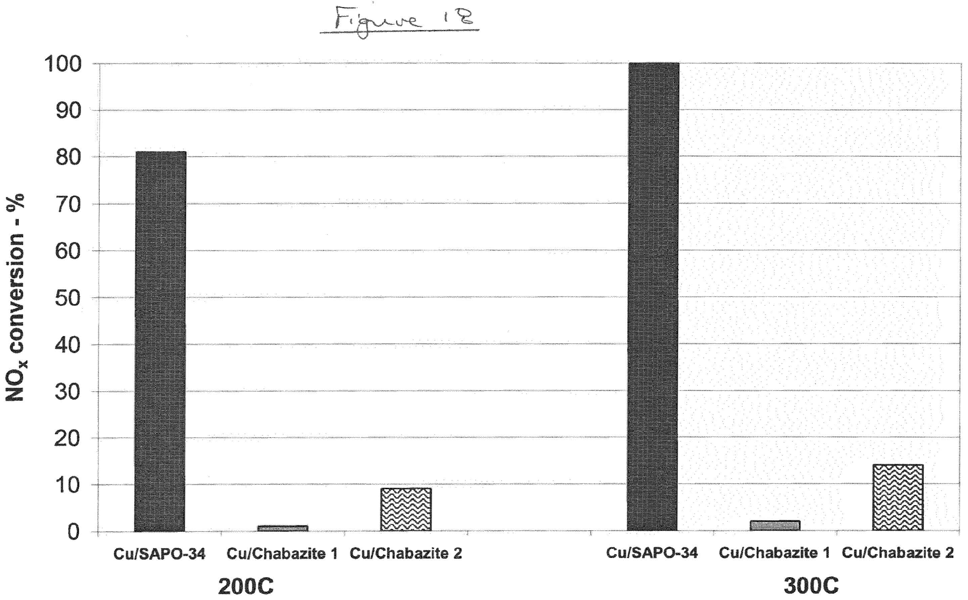

### Example 13 - Results for experiments shown in Figures 17 and 18

Cu/SAPO-34 (not according to the invention) and a Cu/naturally occurring chabazite type material having a SAR of about 4 (not according to the invention) were prepared according to Example 2 and the fresh materials were tested according to Example 6. The results are shown in Figure 17, from which it can be seen that the NOₓ conversion activity of the naturally occurring Cu/chabazite is significantly lower than Cu/SAPO-34. Figure 18 is a bar chart comparing the NOₓ conversion activity of two fresh Cu/naturally occurring chabazite type materials prepared according to Example 2 at two temperature data points (200°C and 300°C), a first chabazite material having a SAR of about 4 and a second chabazite material of SAR about 7. It can be seen that whilst the NOₓ conversion activity for the SAR 7 chabazite is better than for the SAR 4 chabazite material, the activity of the SAR 7 chabazite material is still significantly lower than the fresh Cu/SAPO-34.

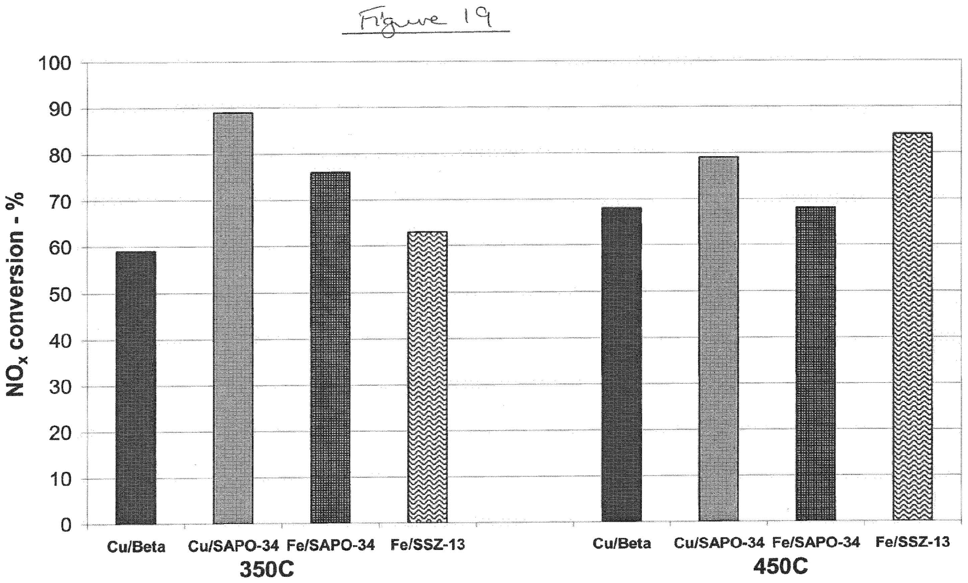

### Example 14 - Results for experiments shown in Figure 19

Cu/SAPO-34 (not according to the invention) and Cu/Beta (not according to the invention) were prepared according to Example 2. Fe/SAPO-34 (not according to the invention) and Fe/SSZ-13 (not according to the invention) were prepared according to Example 1. The samples were aged according to Example 4 and the aged samples were tested according to Example 6. The NOₓ activity at the 350°C and 450°C data points is shown in Figure 19, from which it can be seen that the Cu/SAPO-34, Fe/SAPO-34 and Fe/SSZ-13 samples exhibit comparable or better performance than the Cu/Beta reference.

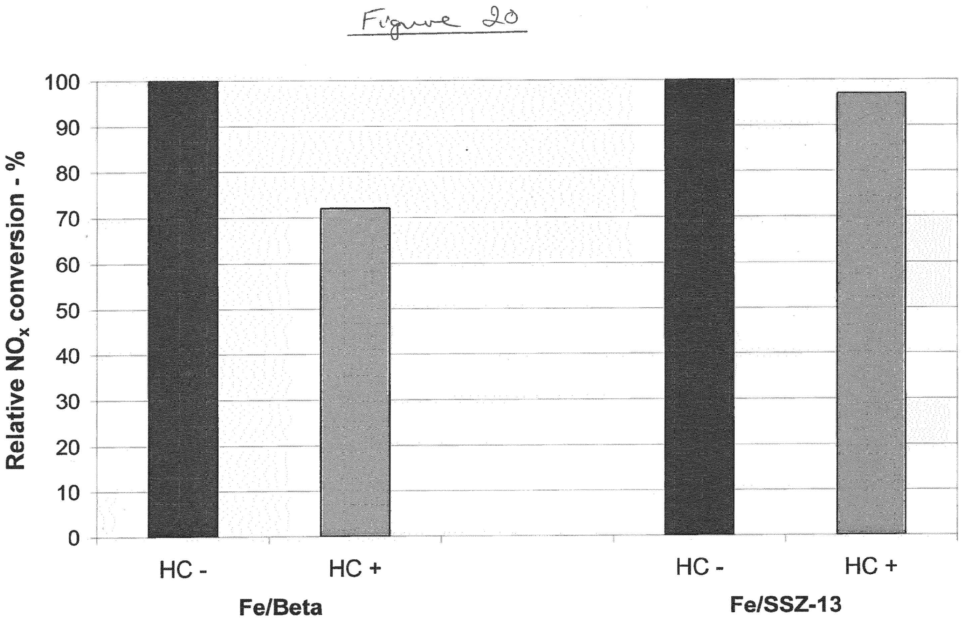

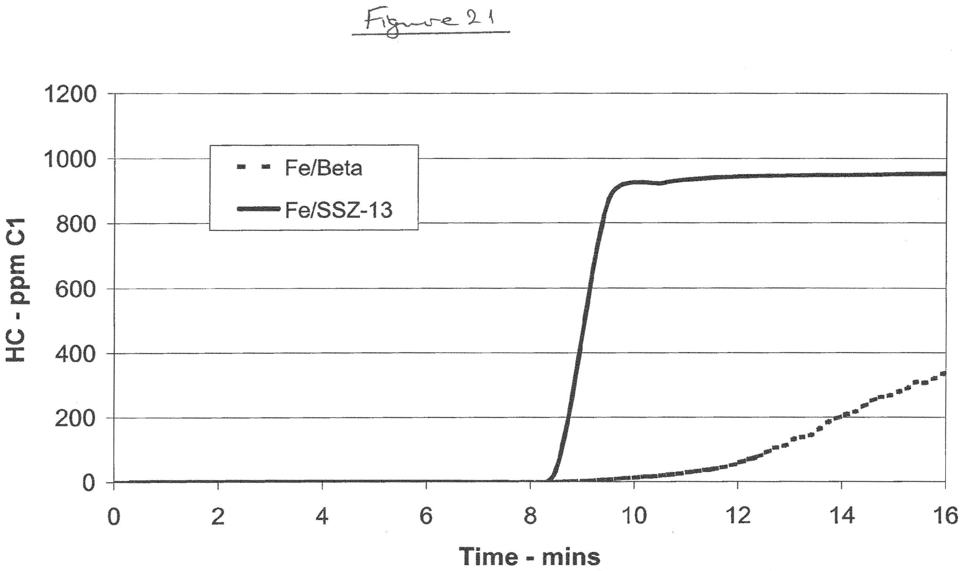

### Example 15 - Results for experiments shown in Figures 20 and 21

Fe/SSZ-13 (not according to the invention) and Fe/Beta (not according to the invention) prepared according to Example 1 were tested fresh as described in Example 7, wherein n-octane (to replicate the effects of unburned diesel fuel in a exhaust gas) was introduced at 8 minutes into the test. The results shown in Figure 20 compare the NOx conversion activity at 8 minutes into the test, but before n-octane was introduced into the feed gas (HC-) and 8 minutes after n-octane was introduced into the feed gas (HC+). It can be seen that the Fe/Beta activity dramatically reduces following n-octane introduction compared with Fe/SSZ-13. We believe that this effect results from coking of the catalyst.

The hypothesis that coking of the Fe/Beta catalyst is responsible for the dramatic reduction of NOₓ conversion activity is reinforced by the results shown in Figure 21, wherein C1 hydrocarbon is detected downstream of the Fe/SSZ-13 catalyst almost immediately after n-octane is introduced into the feed gas at 8 minutes. By comparison, a significantly lower quantity of C1 hydrocarbon is observed in the effluent for the Fe/Beta sample. Since there is significantly less C1 hydrocarbon present in the effluent for the Fe/Beta sample, and the n-octane must have gone somewhere, the results suggest that it has become coked on the Fe/Beta catalyst, contributing to the loss in NOₓ conversion activity.

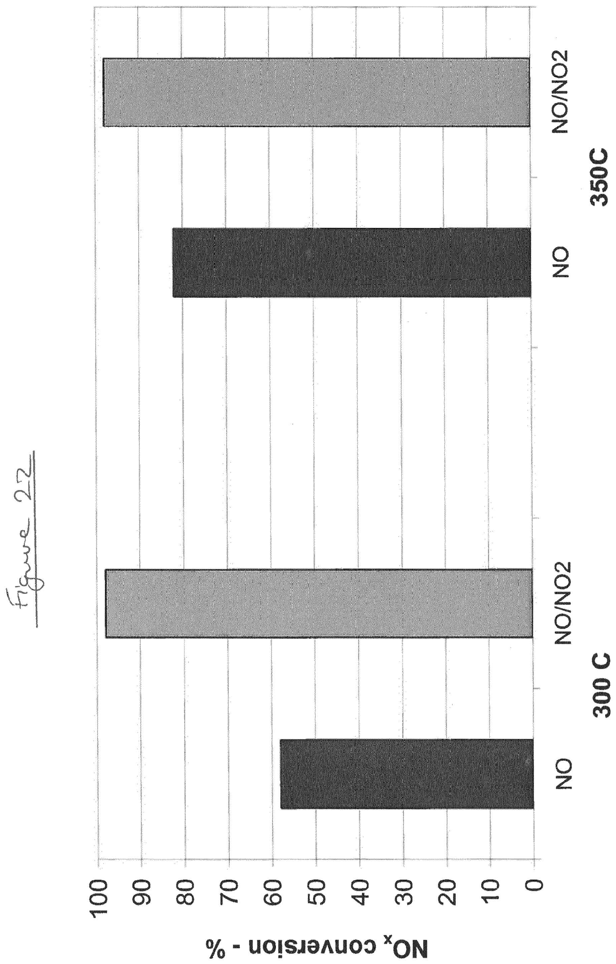

### Example 16 - Results for experiments shown in Figure 22

Fe/SSZ-13 (not according to the invention) prepared according to Example 1 was tested fresh, i.e. without ageing, in the manner described in Example 6. The test was then repeated using identical conditions, except in that the 350ppm NO was replaced with a mixture of 175ppm NO and 175ppm NO₂, i.e. 350ppm total NOₓ. The results from both tests are shown in Figure 22, from which the significant improvement obtainable from increasing the NO₂ content of NOₓ in the feed gas to 1:1 can be seen. In practice, the NO:NO₂ ratio can be adjusted by oxidising NO in an exhaust gas, e.g. of a diesel engine, using a suitable oxidation catalyst located upstream of the NH₃-SCR catalyst.

## Claims

1. An exhaust system for a vehicular lean burn internal combustion engine, which system comprising:
a conduit for carrying a flowing exhaust gas,
a source of nitrogenous reductant,
a synthetic aluminosilicate small pore zeolite catalyst, wherein the synthetic aluminosilicate zeolite has a silica-to-alumina ratio (SAR) of from 8 to 150 and contains a maximum ring size of eight tetrahedral atoms and is the CHA Framework Type Code and contains at least one transition metal, which at least one transition metal consists of copper and
which catalyst is coated on a monolith substrate disposed in a flow path of the exhaust gas and means for metering the nitrogenous reductant from the source of nitrogenous reductant into a flowing exhaust gas upstream of the synthetic aluminosilicate small pore zeolite catalyst,
wherein an oxidation catalyst comprising at least one platinum group metal for oxidising nitrogen monoxide to nitrogen dioxide is located upstream of the means for metering the nitrogenous reductant into a flowing exhaust gas,
wherein the CHA Framework Type Code synthetic aluminosilicate small-pore zeolite is SSZ-13.

2. An exhaust system according to claim 1, wherein the synthetic aluminosilicate small pore zeolite contains ion exchanged copper.

3. An exhaust system according to any preceding claim, wherein the total copper metal present in the catalyst is from 0.01 to 20 wt%, based on the total weight of the synthetic aluminosilicate zeolite catalyst.

4. An exhaust system according to any preceding claim, wherein the synthetic aluminosilicate small pore zeolite catalyst is coated on a flow-through monolith substrate or a filter monolith substrate.

5. An exhaust system according to any preceding claim, comprising means, when in use, for controlling the metering means so that nitrogenous reductant is metered into the flowing exhaust gas only when it is determined that the synthetic aluminosilicate small pore zeolite catalyst is capable of catalysing NOₓ reduction at or above a desired efficiency.

6. An exhaust system according to any preceding claim, wherein a filter substrate is located between the oxidation catalyst and the synthetic aluminosilicate small pore zeolite catalyst.

7. An apparatus comprising a vehicular lean-burn engine and an exhaust system according to any preceding claim.

8. An apparatus according to claim 7, wherein the engine is a diesel engine, a lean-burn gasoline engine or an engine powered by liquid petroleum gas or natural gas.

9. A method of converting nitrogen oxides in an exhaust gas derived from the combustion of fuel in a vehicular lean burn internal combustion engine to nitrogen by contacting the nitrogen oxides with a nitrogenous reducing agent in the presence of a synthetic aluminosilicate small pore zeolite catalyst,
wherein the synthetic aluminosilicate zeolite has a silica-to-alumina ratio of from 8 to 150 and contains a maximum ring size of eight tetrahedral atoms and is the CHA Framework Type Code and contains at least one transition metal, which at least one transition metal consists of copper and which catalyst is coated on a monolith substrate,
wherein nitrogen monoxide in the exhaust gas is oxidised to nitrogen dioxide using an oxidation catalyst comprising at least one platinum group metal located upstream of the synthetic aluminosilicate small pore zeolite catalyst and the resulting gas is then mixed with the nitrogenous reducing agent before the mixture is fed into the synthetic aluminosilicate small pore zeolite catalyst,
wherein the CHA Framework Type Code synthetic aluminosilicate small pore zeolite is SSZ-13.

10. A method according to claim 9, wherein the nitrogen oxides are reduced with the nitrogenous reducing agent at a temperature of at least 100°C.

11. A method according to claim 8, 9 or 10, wherein addition of nitrogenous reducing agent is controlled so that NH₃ at the synthetic aluminosilicate small pore zeolite catalyst inlet is controlled to be 60% to 200% of theoretical ammonia calculated at 1:1 NH₃/NO and 4:3 NH₃/NO₂.

## Patentansprüche

1. Abgassystem für einen mager betriebenen Verbrennungsmotor eines Fahrzeugs, wobei das System Folgendes umfasst:
eine Trägerleitung für ein strömendes Abgas,
eine Quelle eines stickstoffhaltigen Reduktionsmittels,
einen kleinporigen Zeolith-Katalysator aus synthetischem Aluminosilikat, wobei der Zeolith aus synthetischem Aluminosilikat ein Verhältnis von Siliciumdioxid zu Aluminiumoxid (SAR) von 8 bis 150 aufweist und eine maximale Ringgröße von acht tetraedrischen Atomen enthält und vom Gerüsttyp mit dem Code CHA ist und mindestens ein Übergangsmetall enthält, wobei das mindestens eine Übergangsmetall aus Kupfer besteht, und
wobei der Katalysator schichtartig auf ein Monolithsubstrat aufgebracht ist, das im Strömungsweg des Abgases angeordnet ist, und Mittel zur Dosierung des stickstoffhaltigen Reduktionsmittels aus der Quelle des stickstoffhaltigen Reduktionsmittels in ein strömendes Abgas stromaufwärts des kleinporigen Zeolith-Katalysator aus synthetischem Aluminosilikat,
wobei sich ein Oxidationskatalysator, der mindestens ein Platingruppenmetall umfasst, welches zur Oxidation von Stickstoffmonoxid zu Stickstoffdioxid dient, sich stromaufwärts des Mittel zur Dosierung des stickstoffhaltigen Reduktionsmittels in ein strömendes Abgas befindet,
wobei es sich bei dem kleinporigen Zeolith aus synthetischem Aluminosilikat vom Gerüsttyp mit dem Code CHA um SSZ-13 handelt.

2. Abgassystem nach Anspruch 1, wobei der kleinporigen Zeolith aus synthetischem Aluminosilikat ionenausgetauschtes Kupfer enthält.

3. Abgassystem nach einem der vorstehenden Ansprüche, wobei das Gesamtkupfermetall, wobei in dem Katalysator metallisches Kupfer zu insgesamt 0,01 bis 20 Gew.-% vorliegt, bezogen auf das Gewicht des Zeolith-Katalysators aus synthetischem Aluminosilikat.

4. Abgassystem nach einem der vorstehenden Ansprüche, wobei der kleinporige Zeolith-Katalysator aus synthetischem Aluminosilikat schichtartig auf ein monolithisches Substrat, das durchströmt wird, oder ein monolithisches Substrat mit Filterwirkung aufgebracht ist.

5. Abgassystem nach einem der vorstehenden Ansprüche, welches Mittel umfasst, die im Betriebszustand dazu dienen, das Dosierungsmittel derart zu steuern, dass das stickstoffhaltige Reduktionsmittel nur dann in das strömende Abgas dosiert wird, wenn festgestellt wird, dass der kleinporige Zeolith-Katalysator aus synthetischem Aluminosilikat dazu in der Lage ist, die NOx-Reduktion mindestens zu dem angestrebten Wirkungsgrad zu katalysieren.

6. Abgassystem nach einem der vorstehenden Ansprüche, wobei sich ein Filtersubstrat zwischen dem Oxidationskatalysator und dem kleinporigen Zeolith-Katalysator aus synthetischem Aluminosilikat befindet.

7. Anlage, die einen mager betriebenen Verbrennungsmotor eines Fahrzeugs und ein Abgassystem nach einem beliebigen vorstehenden Anspruch umfasst.

8. Anlage nach Anspruch 7, wobei es sich bei dem Motor um einen Dieselmotor, einen mager betriebenen Benzinmotor oder um einen Motor, der mit Flüssiggas oder Erdgas betrieben wird, handelt.

9. Verfahren zum Umwandeln von Stickoxiden, die in einem Abgas vorliegen, welches aus der Verbrennung eines Brennstoffs in einem mager betriebenen Verbrennungsmotor eines Fahrzeugs stammt, zu Stickstoff, indem die Stickoxide in Gegenwart eines kleinporigen Zeolith-Katalysators aus synthetischem Aluminosilikat mit einem stickstoffhaltigen Reduktionsmittel in Kontakt gebracht werden,
wobei der Zeolith aus synthetischem Aluminosilikat ein Verhältnis von Siliciumdioxid zu Aluminiumoxid von 8 bis 150 aufweist und eine maximale Ringgröße von acht tetraedrisch Atomen enthält, und vom Gerüsttyp mit dem Code CHA ist, und mindestens ein Übergangsmetall enthält, wobei das mindestens eine Übergangsmetall aus Kupfer besteht, und wobei der Katalysator schichtartig auf ein monolithisches Substrat aufgebracht ist, wobei Stickstoffmonoxid, das in dem Abgas vorliegt, zu Stickstoffdioxid oxidiert wird, indem ein Oxidationskatalysator zur Anwendung gebracht wird, der mindestens ein Platingruppenmetall umfasst, wobei er sich stromaufwärts des kleinporigen Zeolith-Katalysators aus synthetischem Aluminosilikat befindet, und das resultierende Gas anschließend mit dem stickstoffhaltigen Reduktionsmittel vermischt wird, bevor die Mischung dem kleinporigen Zeolith-Katalysator aus synthetischem Aluminosilikat zugeführt wird,
wobei es sich bei dem kleinporigen Zeolith aus synthetischem Aluminosilikat vom Gerüsttyp mit dem Code CHA um SSZ-13 handelt.

10. Verfahren nach Anspruch 9, wobei die Stickoxide bei einer Temperatur von mindestens 100 °C mit dem stickstoffhaltigen Reduktionsmittel reduziert werden.

11. Verfahren nach einem der Ansprüche 8, 9 oder 10, wobei der Zusatz des stickstoffhaltigen Reduktionsmittels derart gesteuert wird, dass am Einlass des kleinporigen Zeolith-Katalysators aus synthetischem Aluminosilikat der NH3 derart gesteuert wird, dass 60 % bis 200 % des theoretischen Ammoniaks vorliegen, wie er für 1:1 NH₃/NO und 4:3 NH₃/NO₂ berechnet wurde.

## Revendications

1. Système d'échappement destiné à un moteur à combustion interne à mélange pauvre de véhicule, ce système comprenant :
un conduit permettant de transporter un gaz d'échappement s'écoulant,
une source de réducteur azoté,
un catalyseur zéolite à petits pores d'aluminosilicate synthétique, dans lequel la zéolite d'aluminosilicate synthétique a un rapport de la silice à l'alumine (SAR) allant de 8 à 150 et contient une taille maximale de cycle de huit atomes tétraédriques et est le code de type de structure CHA et contient au moins un métal de transition, cet au moins un métal de transition étant constitué de cuivre et
ce catalyseur étant revêtu sur un substrat monolithique disposé dans un trajet d'écoulement du gaz d'échappement, et un moyen permettant de doser le réducteur azoté provenant de la source de réducteur azoté dans un gaz d'échappement s'écoulant en amont du catalyseur zéolitique à petits pores d'aluminosilicate synthétique,
dans lequel un catalyseur d'oxydation comprenant au moins un métal du groupe du platine pour l'oxydation du monoxyde d'azote en dioxyde d'azote est localisé en amont du moyen permettant de doser le réducteur azoté dans un gaz d'échappement s'écoulant,
dans lequel la zéolite à petits pores d'aluminosilicate synthétique à code de type de structure CHA est SSZ-13.

2. Système d'échappement selon la revendication 1, dans lequel la zéolite à petits pores d'aluminosilicate synthétique contient du cuivre d'échange ionique.

3. Système d'échappement selon l'une quelconque revendication précédente, dans lequel le cuivre métallique total présent dans le catalyseur va de 0,01 à 20 % en poids, en fonction du poids total du catalyseur zéolite d'aluminosilicate synthétique.

4. Système d'échappement selon l'une quelconque revendication précédente, dans lequel le catalyseur zéolite à petits pores d'aluminosilicate synthétique est revêtu sur un substrat monolithique à écoulement traversant ou un substrat monolithique de filtre.

5. Système d'échappement selon l'une quelconque revendication précédente, comprenant un moyen, en cours d'utilisation, permettant de commander le moyen de dosage de sorte que le réducteur azoté est dosé dans le gaz d'échappement s'écoulant uniquement lorsqu'il est déterminé que le catalyseur zéolite à petits pores d'aluminosilicate synthétique est capable de catalyser une réduction de NOₓ au niveau ou au-dessus d'un rendement souhaité.

6. Système d'échappement selon l'une quelconque revendication précédente, dans lequel un substrat de filtre est localisé entre le catalyseur d'oxydation et le catalyseur zéolite à petits pores d'aluminosilicate synthétique.

7. Appareil comprenant un moteur à mélange pauvre de véhicule et un système d'échappement selon l'une quelconque revendication précédente.

8. Appareil selon la revendication 7, dans lequel le moteur est un moteur diesel, un moteur essence à mélange pauvre ou un moteur fonctionnant avec du gaz de pétrole liquéfié ou du gaz naturel.

9. Procédé de conversion d'oxydes d'azote dans un gaz d'échappement dérivé de la combustion de carburant dans un moteur à combustion interne à mélange pauvre de véhicule, en azote en mettant en contact les oxydes d'azote avec un agent réducteur azoté en présence d'un catalyseur zéolite à petits pores d'aluminosilicate synthétique,
dans lequel la zéolite d'aluminosilicate synthétique a un rapport de la silice à l'alumine allant de 8 à 150 et contient une taille maximale de cycle de huit atomes tétraédriques et est le code de type de structure CHA et contient au moins un métal de transition, cet au moins un métal de transition étant constitué de cuivre et ce catalyseur étant revêtu sur un substrat monolithique, dans lequel le monoxyde d'azote dans le gaz d'échappement est oxydé en dioxyde d'azote à l'aide d'un catalyseur d'oxydation comprenant au moins un métal du groupe du platine localisé en amont du catalyseur zéolite à petits pores d'aluminosilicate synthétique, et le gaz résultant est ensuite mélangé avec l'agent réducteur azoté avant que le mélange ne soit alimenté dans le catalyseur zéolite à petits pores d'aluminosilicate synthétique,
dans lequel la zéolite à petits pores d'aluminosilicate synthétique à code de type de structure CHA est SSZ-13.

10. Procédé selon la revendication 9, dans lequel les oxydes d'azote sont réduits avec l'agent réducteur azoté à une température d'au moins 100 °C.

11. Procédé selon la revendication 8, 9 ou 10, dans lequel l'addition d'agent réducteur azoté est commandée de sorte que NH₃ au niveau de l'entrée de catalyseur zéolite à petits pores d'aluminosilicate synthétique est commandé pour être 60 % à 200 % de l'ammoniac théorique calculé à 1:1 NH₃/NO et 4:3 NH₃/NO₂.
